# NEW EUROPEAN PATENT SPECIFICATION

(11) **EP 2 949 414 B2**
(45) Date of publication and mention of the opposition decision: **28.10.2020**
(45) Mention of the grant of the patent: 20.12.2017
(21) Application number: 14754288.0
(22) Date of filing: 30.01.2014
(51) Int. Cl.: B23D 61/04, B23D 61/02

(54) **CIRCULAR SAW BLADE**
KREISSÄGEBLATTE
LAME DE SCIE CIRCULAIRE

(30) Priority: 25.02.2013 JP 2013034207
(43) Date of publication of application: 02.12.2015
(73) Proprietor: Kanefusa Kabushiki Kaisha, Niwa-gun, Aichi 480-0192 (JP)
(72) Inventor: NAKAJIMA Yasutaka, Niwa-gun Aichi 480-0192 (JP); OKABE Fuminori, Niwa-gun Aichi 480-0192 (JP)
(74) Representative: Prüfer & Partner mbB Patentanwälte · Rechtsanwälte
(86) International application number: PCT/JP2014/052160
(87) International publication number: WO 2014/129285

(56) References cited:
- WO-A1-2013/098963
- DE-A1- 3 943 321
- DE-A1-102007 022 001
- DE-A1-102009 027 896
- JP-A- H07 116 916
- JP-A- H09 216 121
- JP-A- 2009 119 869
- JP-A- 2009 292 142
- JP-A- 2011 168 035
- US-A1- 2003 233 927

## Description

### TECHNICAL FIELD

The present invention relates to a circular saw blade for cutting workpieces, such as steel materials, with tips provided in its peripheral portion, according to the preamble of claim 1.

### BACKGROUND ART

Document DE3943321A1 discloses on the figures 4 and 13(c) the preamble of claim 1. Another circular saw is known from US2003/0233927A1. In a circular saw blade used for cutting workpieces, such as steel materials, tips are brazed, at a predetermined interval, on the peripheral portion of a circular base metal, and cutting edges are formed on the tips (see, for example, JP07116916A). Each tip has a clearance face formed on the outer periphery of the tip, and a rake face formed on the front of the tip in the rotational direction, and a cutting edge is formed at an edge where the clearance face and the rake face intersect. In the tips of a circular saw blade to cut a relatively hard workpiece, such as a steel material, the rake angle of its rake face, which is contiguous with the cutting edge, is set to a negative angle, and a second rake face is contiguously formed radially inward of the rake face to control the shapes of chips. In general, the second rake face is formed on a virtual line that connects the rotation center of the circular saw blade and the cutting edge, or formed at a positive angle relative to the virtual line so that it is inclined in the direction opposite the rotational direction in order to secure a large gullet that is defined in front of the tip in the rotational direction. Here, each tip is bonded on a stepwise installation portion formed on a tooth body in the peripheral portion of the base metal by brazing the back surface, which faces in the direction opposite the rotational direction, and the bottom surface, which faces the rotation center, with the second rake face facing the gullet.

### RELATED ART DOCUMENTS

### PATENT DOCUMENTS

Patent Document 1: Japanese Unexamined Patent Application Publication No. H07-116916.

### SUMMARY OF THE INVENTION

### PROBLEMS TO BE SOLVED BY THE INVENTION

When workpieces are cut, chips or weld beads that come out from the workpieces may become caught in the cutting edges. With the tips shaped as described above, this may cause problems, such as damage to or dropping of the tips due to the breakage of the brazed portions, because the stress generated when chips or the like are bitten is likely concentrated on the borderline between the second rake face and the base metal. In particular, when a tubular welded steel pipe is cut, chips accumulated inside of the steel pipe as cutting progresses or weld beads harder than the steel pipe body are caught therein so that breakage or the like of the tips are liable to occur.

To appropriately solve the above-described problems inherent in the conventional circular saw blades, the present invention has been proposed to provide a circular saw blade in which tips are not easily damaged and the brazed portions are not easily broken.

### MEANS OF SOLVING THE PROBLEMS

To overcome the problems and to achieve the anticipated object, the circular saw blade of the invention according to claim 1 of the present application is a circular saw blade having a plurality of tips bonded at intervals on a peripheral portion of a base metal for cutting a workpiece with cutting edges formed on the plurality of tips, wherein
each of the tips has a first rake face that is contiguous with the cutting edge, and a second rake face that faces a gullet provided in front of the tip in the rotational direction and has a radially inward inner edge that is in contact with an outer peripheral edge of the base metal that defines the gullet,
the first rake face is formed such that a first rake angle is a negative angle relative to a first reference line drawn from a rotation center of the circular saw blade to the cutting edge; and
the second rake face is formed such that a second rake angle, which is formed between the first reference line and a second reference line that passes through the radially inward inner edge along the second rake face, is a negative angle.

Furthermore, the tip is fixed by fitting a basal portion, which extends radially inward of the inner edge of the second rake face, into an installation portion, which is formed on the base metal such that it is recessed inward radially to conform to the periphery of the basal portion, so as to bond the periphery of the basal portion to the base metal, and
the tip has a slant on the periphery of the basal portion, which is formed radially inward of and contiguous with the inner edge of the second rake face and inclined in the direction opposite the rotational direction relative to the second reference line.

According to the invention, the second rake face of the tip allows discharge of chips or the like from the gullet in the outer peripheral direction, while reducing the load applied on the borderline between the tip and the base metal. This reduces the detachment of the tip from the base metal or the tip itself becoming damaged resulting from the concentration of stress. Furthermore, it is possible to reduce the stress applied on the borderline facing the gullet between the second rake face of the tip and the base metal by providing a slant that inclines on the positive side relative to the second rake face with the second rake face.

According to claim 2, the second rake face is formed radially inward of the first rake face, and the second rake angle is set to be larger on the positive side than the first rake angle.

Accordingly, it is possible to reduce the load applied on the borderline between the tip and the base metal, by setting the second rake face at a negative angle to be larger on the positive side than the first rake face.

According to claim 3, the slant is inclined at a positive angle relative to the first reference line.

Accordingly, it is possible to reduce further the stress applied on the borderline facing the gullet between the second rake face of the tip and the base metal.

### EFFECTS OF THE INVENTION

According to the circular saw blade of the present invention, the tips are less likely to be damaged and the brazed portions are less likely to be broken.

### BRIEF DESCRIPTION OF THE DRAWINGS

FIG. 1 is a front view of a circular saw blade according to an embodiment of the present invention;
FIG. 2 is an enlarged view of the main section of a circular saw blade according to the embodiment;
FIG. 3 is a cross-sectional view taken along the line A-A in FIG. 2;
FIG. 4 is an illustrative view of a circular saw blade of a comparative example not according to the invention;
FIG. 5 is an illustrative view of an analytical model.

### MODE FOR CARRYING OUT THE INVENTION

Next, a preferred Embodiment of the circular saw blade of the present invention will be described below with reference to the attached drawings.

### EMBODIMENT

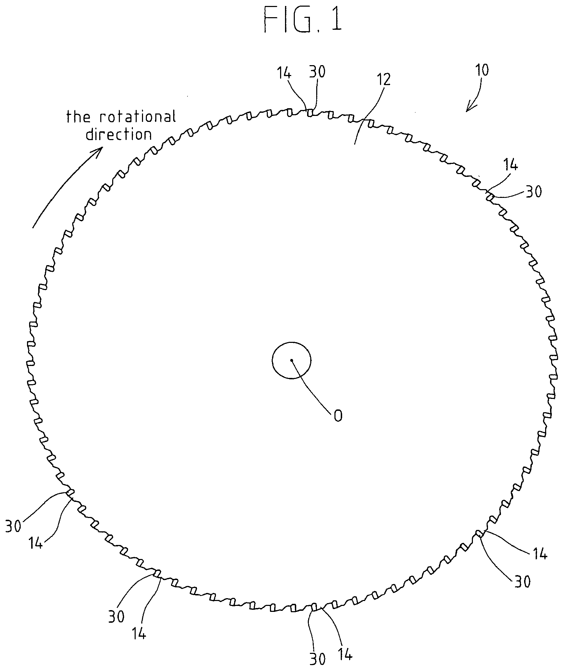

As shown in FIG. 1, the circular saw blade 10 according to the Embodiment includes a substantially circular base metal 12, and each of tips 30 arranged on a plurality of tooth bodies 14 formed at the periphery of the base metal 12. The circular saw blade 10 rotates in a predetermined direction around an axis that passes through a rotation center O of the base metal 12. Under the rotation of the circular saw blade 10, a workpiece (an object to be cut) is cut with the cutting edges 32 formed on the tips 30.

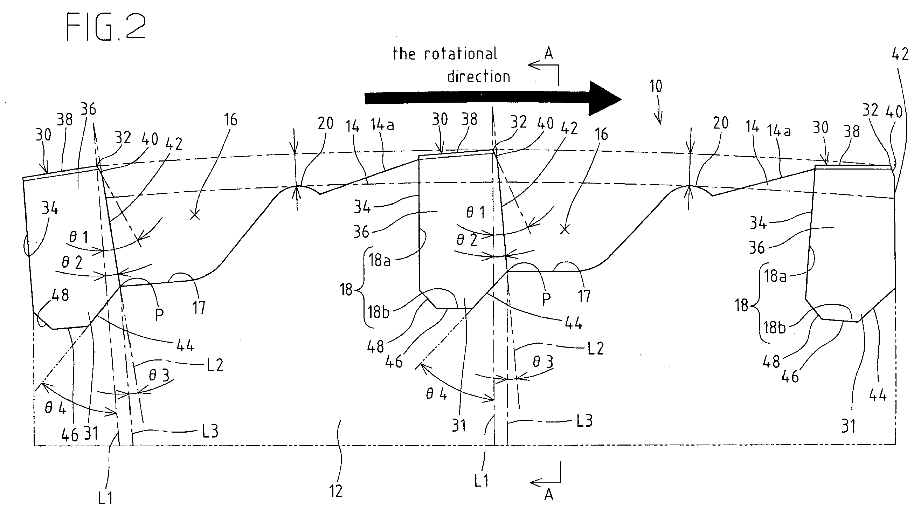

The base metal 12 is made of a steel, such as a carbon tool steel and an alloy tool steel, and each the tooth body 14 is formed on the body portion of the base metal 12 such that they protrude radially outwardly therefrom. In the circular saw blade 10, the tooth bodies 14 are formed in the peripheral portion of the base metal 12 to be spaced apart from one another at regular intervals or at irregular intervals in the rotational direction (peripheral direction). A gullet 16 is also formed in front of each tip 30 in the rotational direction between the tooth bodies 14, 14 adjacent to each other in the rotational direction. The gullet 16 can accommodate chips or the like of the workpiece generated while it is being cut with the tips 30. As shown in FIG. 2, the base metal 12 includes installation portions 18 each formed on the front side in the rotational direction of the tooth bodies 14. The tips 30 are housed in the respective installation portions 18, and the tips 30 are brazed to the base metal 12. The installation portion 18 of the Embodiment is defined by a longitudinal wall surface 18a, which is formed in such a manner to radially extend corresponding to conform to the back surface 34 on the back side of the tip 30 in the rotational direction and a recessed surface 18b, which is formed in such a manner to be further recessed radially inward than a gullet bottom 17 corresponding to a basal portion 31 of the tip 30. Here, in the circular saw blade 10 of the Embodiment, the plurality of tooth bodies 14 are formed in the same shape, and the plurality of tips 30 are formed in the same shape, so that all the gullet 16 have the same shape.

The tip 30 is a block-like article composed of a simple substance, such as cemented carbide, cermet, CBN (cubic boron nitride) or polycrystalline diamond, or of a composite of these substances. The tip 30 may have a coating on its external surface. The coating may be of a single-layered structure, or of a multi-layered structure of the same or different substances. Examples of such layer(s) include a layer of metal, nitride, carbide, carbonitride, oxide, and oxynitride, containing one or more elements, such as chrome, titanium, and aluminum.

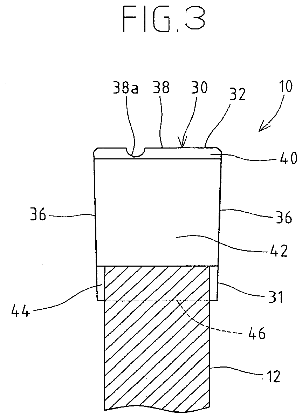

As shown in FIG. 2, the back surface 34 of the tips 30 is joined to the longitudinal wall surface 18a and the periphery of the basal portion 31 thereof is joined to a recessed surface 18b. Both side surfaces 36, 36 of the tips 30, which face the width direction (the direction along the rotation axis of the circular saw blade 10), and the clearance face 38 thereof formed on the outer periphery facing outward in the radial direction, are exposed from the base metal 12. And the surface of the tip that faces in the rotational direction, excluding the periphery of the basal portion 31 fitted into the recessed portion 18b, faces the gullet 16. As shown in FIG. 3, the tip 30 is formed such that the size in the width direction is slightly larger than the thickness of the base metal 12. The tip 30 is also formed such that each side surface 36 is flat, and both side surfaces 36, 36 gradually separate in the radially outward direction. In other words, the tip 30 of the Embodiment has a wider width on the side of the cutting edge 32 than on the side of the basal portion 31.

The front edge in the clearance face 38 in the rotational direction of the tip 30 is the cutting edge 32, and the first rake face 40, which faces in the rotational direction, is formed contiguous with this cutting edge 32. The clearance face 38 is formed such that it is gradually inclined in the direction opposite the rotational direction radially inward from the cutting edge 32 relative to the surface perpendicular to the virtual first reference line L1, which connects the rotation center O with the cutting edge 32 in a straight line. The cutting edge 32 may be a straight edge as shown in FIG. 2, or may be in the form of a chevron that tapers radially inward from the center portion in the width direction, or may be in the other forms. Furthermore, a round notch 38a may also be provided in the clearance face 38 to divide chips (see FIG. 3). In the Embodiment, a round notch 38a, which is recessed radially inward, is formed over the entire length of the clearance face 38 in the rotational direction, and is disposed off the center in the width direction. In the tip 30 of the Embodiment, the two corners of the clearance face 38 in the width direction are chamfered. The first rake face 40 is flat across the entire surface in the radial and width directions, and is formed such that the first rake angle θ1 is a negative angle relative to the first reference line L1. In other words, the first rake face 40 is formed such that it is inclined in the rotational direction from the outside toward the inside in the radial direction.

As shown in FIG. 2, in the tip 30, the second rake face 42 is formed further inward radially than the first rake face 40, and faces a gullet 16, which is formed in front of the tip in the rotational direction. In the second rake face 42, the radially inward inner edge contacts the outer peripheral edge of the base metal 12 that defines the gullet 16. In the Embodiment, the inner edge is in contact with the gullet bottom 17, which extends substantially along the rotational direction. In other words, the borderline P between the tip 30 that is exposed in the gullet 16 and the outer peripheral edge of the base metal 12 is formed at the intersection of the second rake face 42 and the gullet bottom 17. As shown in FIG. 2, the first rake face 40 of the tip 30 may be contiguous with the second rake face 42, or one or more supplementary rake faces may be provided between the first rake face 40 and the second rake face 42. Furthermore, the second rake face 42 may be flat across the entire surface in the radial and width directions, or may be a radially curved surface so that the surface facing the gullet 16 may be concave or convex. The second rake face 42 is formed such that the second rake angle θ2 formed between the first reference line L1 and the second reference line L2, which is a virtual straight line that is collinear with the second rake face 42 and extends beyond the second rake face 42 passing through the inner edge of the second rake face 42, is a negative angle. In other words, the second rake face 42 is inclined in the rotational direction relative to the first reference line L1 from the outside toward the inside in the radial direction, so that the second rake face 42 is not in parallel with the first reference line L1. Here, like the Embodiment, when the second rake face 42 is a flat surface, the second reference line L2 is collinear with the second rake face 42, and when the second rake face 42 is a curved surface, the second reference line L2 is a tangent line that passes the inner edge. The second rake face 42 is formed so that the angle θ3, which is formed between a third virtual reference line L3 that connects the rotation center O of the circular saw blade 10 with the inner edge of the second rake face 42 in a straight line and the second reference line L2, is also a negative angle.

As shown in FIG. 2, the second rake face 42 is inclined at a different angle from that of the first rake face 40, and the second rake angle θ2 is preferably formed larger on the positive side than the first rake angle θ1 (|the first rake angle θ1|>|the second rake angle θ2|). The second rake face 42 (the second reference line L2) is formed such that it is inclined in the direction opposite the rotational direction (on the positive side) relative to the first rake face 40. In this case, the second rake face 42 is preferably inclined in the range of 5° to 45° on the positive side relative to the first rake face 40. The second rake face 42 of the Embodiment is formed to have a radially larger size than that of the first rake face 40. As shown in FIG. 2, the tip 30 is also formed such that the back surface 34 is in parallel with the first reference line L1 or is inclined in the rotational direction from the outside toward the inside in the radial direction. Although the tip 30 may have the same width between the second rake face 42 and the back surface 34 in the rotational direction across the entire radial direction, the width of the tip preferably widens from the outside toward the inside in the radial direction as shown in FIG. 2.

As shown in FIG. 2, the tip 30 of the Embodiment has a basal portion 31, on its radially inward side, that extends inward radially of the inner edge of the second rake face 42. A slant 44 is formed contiguously with the inner edge of the second rake face 42 on the periphery of the basal portion 31 on the radially inward side of the inner edge such that the slant 44 is inclined in the direction opposite the rotational direction relative to the second reference line L2. The slant 44 is inclined radially inward from the inner edge of the second rake face 42 in the direction opposite the rotational direction (positive side), so that it forms an angle of slant θ4, which is a positive angle relative to the first reference line L1. The slant 44 forms a positive angle relative to the second reference line L2 as well. On the periphery of the basal portion 31, a bottom surface 46 is provided that is contiguous with the slant 44 such that the bottom surface 46 lies radially inward of the slant 44 and is orthogonal to the first reference line L1. A slope 48 is formed between the back surface 34 and the bottom surface 46. The slope 48 is inclined forward (negative side) in the rotational direction 34 from the back surface toward radially inward side so that it forms a negative angle relative to the first reference line L1. As described above, the periphery of the basal portion 31 is formed in such a shape as if its front and back corners have been chamfered in the rotational direction. The resultant multifaceted periphery is fitted into the recessed surface 18b of the installation portion 18.

As shown in FIG. 2, in the circular saw blade 10 of the Embodiment, the outer peripheral edge 14a of a tooth body 14 is contiguous with the back surface 34 of the tip 30, which is positioned on the front side in the rotational direction, and the outer peripheral edge 14a of a tooth body 14 extends radially inward of the cutting edge 32 of the tip 30. The outer peripheral edge 14a of the tooth body 14 is formed such that it is inclined radially outward from the gullet 16 side toward the front side in the rotational direction. In the outer peripheral edge 14a of the tooth body 14, a protrusion 20 is formed such that it protrudes radially outward from the outer peripheral edge 14a, and the radially outward top of the protrusion 20 is positioned radially inward of the cutting edge 32 of the tip 30. The protrusion 20 is provided on the front side of the gullet 16 in the rotational direction, and the top of the protrusion is preferably formed within 1.5 mm radially inward of the rotational track of the cutting edge 32 of the tip 30. The protrusion 20 of the Embodiment protrudes like a lump from the outer peripheral edge of the tooth body 14, and the top is formed like an arc. The protrusion 20 is formed such that its periphery in the rotational direction is inclined radially inward of its top in the rotational direction.

### [Effects of the Embodiment]

Next, the effect of the circular saw blade 10 according to the Embodiment will be explained. According to the circular saw blade 10 of the Embodiment, the second rake face 42 facing the gullet 16 is inclined at a negative angle relative to the first reference line L1, so that chips or the like caught in the gullet 16 can be discharged from the gullet 16 because of the inclination of the second rake face 42. That is, the circular saw blade 10 having tips 30 with the above-described second rake face 42 can reduce the impact at the borderline P between the tip 30 that is exposed in the gullet 16 and the base metal 12 of the gullet 16. Furthermore, because the second rake face 42 is inclined at a negative angle relative to the first reference line L1, it can prevent the impact created when chips or the like strike the front surface of the tip 30 in the rotational direction from concentrating on the borderline P between the tip 30 and the base metal 12. Thus, this can reduce the load applied on the borderline P between the tip 30 and the base metal 12 in the circular saw blade 10, which is relatively weak in strength. This, in turn, can reduce detachment of the tip 30 from the base metal 12 as a result of breakage of the joint portion in the borderline P or the damage to the tip itself due to the concentration of stress. In particular, this enables easy cutting of even a workpiece such as a tubular steel pipe that has been produced by welding the edges of rolled steel plates and inside of which not only chips but also weld beads are likely to remain during cutting. Since the circular saw blade 10 has a second rake face 42 inclined at a negative angle on the positive side relative to the first rake face 40, the load on borderline P between the tip 30 and the base metal 12 can be further reduced.

In the circular saw blade 10, the basal portion 31 located radially inward of the second rake face 42 of the tip 30 is fitted into the installation portion 18 of the base metal 12, which is recessed to conform to the basal portion 31, so that not only the back surface 34 but also the periphery of the basal portion 31 are joined to the base metal 12. In the circular saw blade 10, the cutting force applied to the tip 30 is received at the joint portion between the periphery of the basal portion 31 in the tip 30 and the recessed surface 18b of the installation portion 18 in the base metal 12, so that the stress applied at the joint portion during cutting decreases. According to the Embodiment, damage of the joint portion at the borderline P can be reduced so that the damage to and the detachment of the tip 30 may be reduced when impact is applied on the borderline P between the second rake face 42 of the tip 30 and the gullet 16 of the base metal 12, compared to configurations in which the bottom surface of the basal portion of the tip 30 lies from the inner edge (the borderline P with the base metal 12) of the second rake face 42 along the rotational direction, or in which the bottom surface of the basal portion inclines radially outward from the inner edge of the second rake face 42 in the direction opposite the rotational direction. The basal portion of the tip 30 further has a slant 44 that is formed contiguous to the second rake face 42 and inclined on the positive side relative to the second rake face 42. This reduces the stress applied at the borderline P between the second rake face 42 and the base metal 12 of the tip 30, so that the brazed portion of the tip 30 is less likely to be damaged and the tip 30 is less likely to be detached.

In the tip 30, the periphery of the basal portion 31 is multifaceted and the joint surface of the base metal 12 is formed to conform to the periphery, so that the joint area between the tip 30 and the base metal 12 is increased. This enhances the strength in the joint between the tip 30 and the base metal 12. The tip 30 is also formed such that the width between the second rake face 42 and the back surface 34, which are positioned on the front side and on the back side in the rotational direction respectively, increases from the outside toward the inside in the radial direction so that the basal portion 31 joins to the base metal 12 on a wider periphery. This further enhances the strength at the joint between the tip 30 and the base metal 12.

The circular saw blade 10 is provided with a protrusion 20 that protrudes radially outward on the outer peripheral edge 14a of the tooth body 14 that extends in front of the gullet 16 in the rotational direction. The protrusion 20 helps prevent chips from getting caught into the gullet 16 during cutting. Thus, because the protrusion 20 can prevent or reduce biting itself of chips in the gullet 16, which is one of the factors that increase the load on the tip 30, occurrence of damage to the tip 30 and breakage of the base metal 12 around the tip 30, or neck-breaking, may be reduced in the circular saw blade 10.

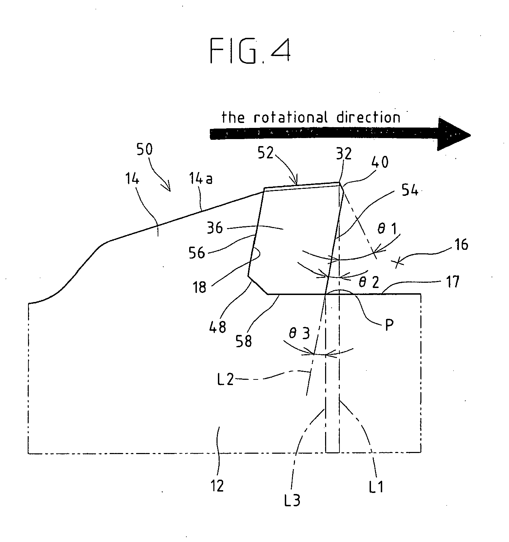

A test to cut a workpiece was performed using the circular saw blade 10 of the Embodiment as shown in FIGs. 1 to 3 and a circular saw blade 50 of the Comparative Example not according to the invention as shown in FIG. 4 for comparison. As the workpiece, a carbon steel pipe for mechanical structure (STKM13A), which was produced by welding the edges of rolled plates, was used. The workpiece has an outer diameter of 50.8 mm and a thickness of 5 mm. The circular saw blades 10, 50 of the Embodiment and the Comparative Example both include a base metal 12 having a thickness of 1.7 mm, an outer diameter of 285 mm, and 80 teeth. The tips 30, 52 with a cutting edge having a width of 2 mm are brazed on the base metal 12. The tips 30, 52 of the Embodiment and the Comparative Example are made of cemented carbide coated with a TiAlN coating on the external surface. The width in the radial direction of the first rake face 40 is 0.3 mm and the widths in the radial direction of the second rake faces 42, 54 are the same in both of the tips 30, 52 of the Embodiment and the Comparative Example. In the tip 30 of the Embodiment, the first rake face 40 has a first rake angle θ1 of -25°, the second rake face 42 has a second rake angle θ2 of -5°, the slant 44 has an angle of slant θ4 of 45°, and the back surface 34 is in parallel with the first reference line L1. In the circular saw blade 10 of the Embodiment, a protrusion 20 is formed on the front side in the rotational direction of the gullet 16, whereas in the circular saw blade 50 of the Comparative Embodiment, a corresponding protrusion 20 is not provided on the outer peripheral edge 14a of a tooth body 14 extending on the front side in the rotational direction of the gullet 16. In the tip 52 of the Comparative Example, the first rake face 40 has a first rake angle θ1 of -25°, the second rake face 52 has a second rake angle θ2 of 10°, and the back surface 56 extends in parallel with the second rake face 52. In the tip 52 of the Comparative Example, the bottom surface 58 extends from the borderline P between the second rake face 42 and the base metal 12 along the rotational direction, and, unlike the Embodiment, the basal portion 31 is not fitted into the base metal 12. A workpiece was cut using the circular saw blade 10 of the Embodiment and the circular saw blade 50 the Comparative Example under the conditions of a cutting speed of 358 m/min and a feeding per tooth of 0.07 mm, while supplying a mist. The test was conducted twice using two each of the circular saw blade 10 of the Embodiment and the circular saw blade 50 of the Comparative Example.

With the circular saw blade 50 of the Comparative Example, abnormalities on the tip 52, such as neck-breaking, chipping, and misalignment of the tip, occurred by significant amount of biting and reached to the total number of counts at which no further cutting was possible. The comparison revealed that the circular saw blade 10 of the Embodiment was able to continue cutting even if the cutting counts reached a certain total number because no abnormalities occurred in the tip 30, and also that less chip biting or the like occurred in the circular saw blade 10 of the Embodiment even if the circular saw blade 10 was used to make a greater number of cuts than the circular saw blade 50 of the Comparative Example. In this manner; the circular saw blade 10 of Embodiment is unlikely to bite chips or the like, and the tip 30 is proven to be less likely to be damaged.

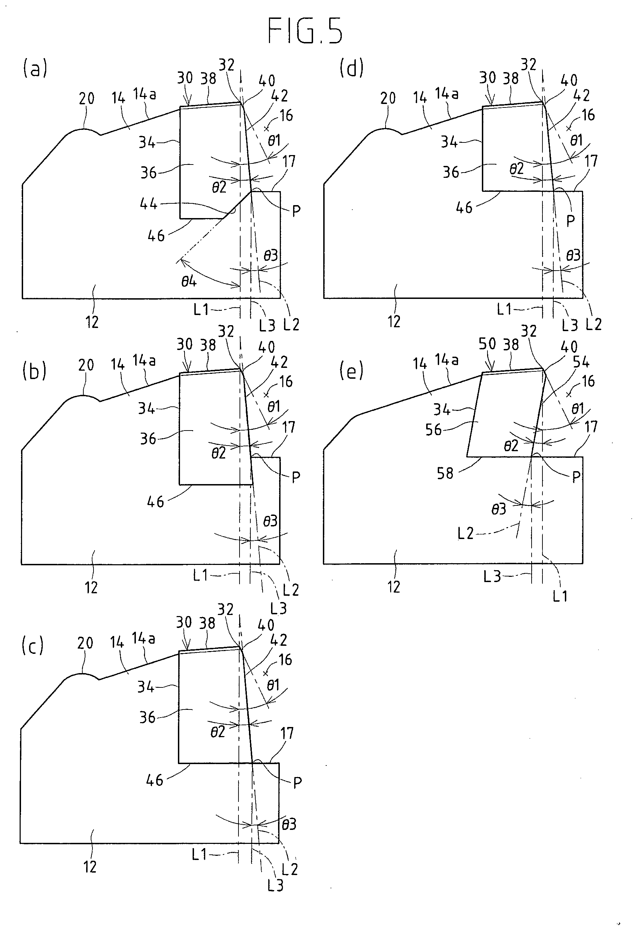

As shown in FIG. 5, analytical model 1 of a circular saw blade according to the present invention, analytical models 2 to 4 of circular saw blades not according to the present invention, and analytical model 5 according to the Comparative Example not according to the invention were prepared by the finite element method. The main stress applied on the borderline P between the tips 30, 52 and the base metal 12 facing the gullet 16 were analyzed for the respective analytical models 1 to 5. Analytical model 1 shown in FIG. 5(a) is set under the same conditions as described above for the Embodiment except that the width of the cutting edge 32 is 3 mm and the tip has no slope 48. Analytical model 2 shown in FIG. 5(b) is that the second rake face 42 is radially extended as it is and the basal portion 31 is fitted into the base metal 12, and is set under the same conditions as analytical model 1 except that no slant 44 is formed. The analytical model 3 shown in FIG. 5(c) is a tip 30 having the same shape as that of the analytical model 2 except that the basal portion 31 of the tip 30 is not fitted into the base metal 12. Analytical model 4 is such that the bottom surface 46 is formed from the second rake face 42 of analytical model 1 along the rotational direction, without the basal portion being fitted into the base metal 12. Analytical model 5 as shown in FIG. 5(e) is set under the same conditions as described above for the Comparative Example except that the width of the cutting edge 32 is 3 mm and the tip has no slope 48.

A force of 30 kgf was applied to the cutting edges of the analytical models of the tips 30, 52 in the direction opposite the rotational direction of the tips, and the main stress applied to the borderline P between the tips 30, 52 and the base metal 12 facing the gullet 16 was calculated. As a result, the stress was 15.3 kgf/mm² for analytical model 1, 16.6 kgf/mm² for analytical model 2, 17.3 kgf/mm² for analytical model 3, 16.8 kgf/mm² for analytical model 4, and 22.5 kgf/mm² for analytical model 5. This demonstrates that setting the second rake face 42 of the tip 30 as described in the present invention reduces the main stress applied at the borderline P between the second rake face 42 and the base metal 12. It is also demonstrated that fitting the basal portion 31 of the tip 30 into the base metal 12 reduces the main stress applied on the borderline P and forming the slant 44 in the basal portion 31 of the tip 30 to be fitted into the base metal 12 further reduces the main stress applied on the borderline P.

### (Modified Embodiments)

The present invention is not limited to the above-described configurations, and the following modifications may be made, for example.
(1) The tip may have a supplementary rake face between the first rake face and the second rake face. Such a supplementary rake face may be radially inclined in the rotational direction relative to the first reference line, and the supplementary rake angle formed between the supplementary rake face and the first reference line may be a negative angle, or the supplementary rake face may be parallel to the first reference line. The supplementary rake face may also be inclined in the direction opposite the rotational direction of the tip relative to the first reference line radially from the outside toward the inside, so that the supplementary rake angle is a positive angle. Here, the supplementary rake face is preferably a negative angle, and in this case, it is preferred that the supplementary rake angle be a negative angle inclined on the positive side compared to the first rake angle and, at the same time, that the second rake angle be a negative angle inclined on the positive side compared to the supplementary rake face (|the first rake angle|>|supplementary rake angle|>|the second rake angle|).
(2) The tip is not limited to the configuration in which the basal portion is fitted into the base metal, and the bottom surface may extend through the borderline between the second rake face and the metal body facing the gullet along the rotational direction.
(3) The shape of the protrusion is not limited to an arc shape as viewed from the side, and may be a triangular, rectangular, or other shape.

### DESCRIPTION OF THE REFERENCE NUMERALS

12: base metal, 16: gullet, 18: installation portion, 30: tip, 32: cutting edge, 40: first rake face, 42: second rake face, 44: slant, L1: first reference line, L2: second reference line, θ1: first rake angle, θ2: second rake angle

## Claims

1. A circular saw blade having a plurality of tips (30) bonded at intervals on a peripheral portion of a base metal (12) for cutting a workpiece with cutting edges (32) formed on the plurality of tips (30), wherein
each of the tips (30) has a first rake face (40) that is contiguous with the cutting edge (32), and a second rake face (42) that faces a gullet (16) provided in front of the tip (30) in the rotational direction and has a radially inward inner edge that is in contact with an outer peripheral edge of the base metal (12) that defines the gullet (16),
wherein the first rake face (40) is formed such that a first rake angle (θ1) is a negative angle relative to a first reference line (L1) drawn from a rotation center (O) of the circular saw blade to the cutting edge (32), and
wherein the second rake face (42) is formed such that a second rake angle (θ2), which is formed between the first reference line (L1) and a second reference line (L2) that passes through the radially inward inner edge along the second rake face (42), is a negative angle;
**characterized in that**
the tip (30) is fixed by fitting a basal portion (31), which extends radially inward of the inner edge of the second rake face (42), into an installation portion (18), which is formed on the base metal (12) such that it is recessed inward radially to conform to the periphery of the basal portion (31), so as to bond the periphery of the basal portion (31) to the base metal (12), and
the tip (30) has a slant (44) on the periphery of the basal portion (31), which is formed radially inward of and contiguous with the inner edge of the second rake face (42) and inclined in the direction opposite the rotational direction relative to the second reference line (L2).

2. The circular saw blade according to claim 1, wherein
the second rake face (42) is formed radially inward of the first rake face (40), and the second rake angle (θ2) is set to be larger on the positive side than the first rake angle (θ1).

3. The circular saw blade according to claim 1,
wherein the slant (44) is inclined at a positive angle relative to the first reference line (L1).

## Patentansprüche

1. Rundes Sägeblatt mit vielen Spitzen (30), die in Intervallen an einem Umfangsabschnitt eines Basismetalls (12) zum Schneiden eines Werkstücks mit Schneidkanten (32) gefügt sind, die an den vielen Spitzen (30) ausgebildet sind, wobei
jede der Spitzen (30) eine erste Spanseite (40), die an der Schneidkante (32) angrenzt, und einen zweite Spanseite (42) hat, die einem Raum (16) zugewandt ist, der vor der Spitze (30) in der Drehrichtung vorgesehen ist und eine radial nach innen gerichtete Innenkante hat, die mit einer Außenumfangskante des Basismetalls (12) in Kontakt ist, die den Raum (16) definiert, wobei
die erste Spanseite (40) so ausgebildet ist, dass ein erster Spanwinkel (θ1) ein negativer Winkel bezüglich einer ersten Referenzgeraden (L1) ist, die von einer Drehmitte (0) des runden Sägeblatts zu der Schneidkante (32) gezogen ist, und
wobei die zweite Spanseite (42) so ausgebildet ist, dass ein zweiter Spanwinkel (θ2), der zwischen der ersten Referenzgeraden (L1) und einer zweiten Referenzgeraden (L2) gebildet ist, die durch die radial nach innen gerichtete Innenkante entlang der zweiten Spanseite (42) hindurchtritt, ein negativer Winkel ist;
**dadurch gekennzeichnet, dass**
die Spitze (30) dadurch befestigt ist, dass ein Basalabschnitt (31), der sich radial innerhalb der Innenkante der zweiten Spanseite (42) erstreckt, in einem Installationsabschnitt (18) angebracht ist, der an dem Basismetall (12) so ausgebildet ist, dass er radial nach innen so ausgespart ist, dass er mit dem Umfang des Basalabschnitts (31) übereinstimmt, um so den Umfang des Basalabschnitts (31) an das Basismetall (12) zu fügen, und
die Spitze (30) eine Schräge (44) an dem Umfang des Basalabschnitts (31) hat, die radial innerhalb und angrenzend an der Innenkante der zweiten Spanseite (42) ausgebildet und in der Richtung entgegen der Drehrichtung bezüglich der zweiten Referenzgeraden (L2) geneigt ist.

2. Rundes Sägeblatt gemäß Anspruch 1, wobei
die zweite Spanseite (42) radial innerhalb der ersten Spanseite (40) ausgebildet ist, und der zweite Spanwinkel (θ2) so eingestellt ist, dass er an der Positivseite größer ist als der erste Spanwinkel (θ1).

3. Rundes Sägeblatt gemäß Anspruch 1,
wobei die Schräge (44) in einem positiven Winkel bezüglich der ersten Referenzgeraden (L1) geneigt ist.

## Revendications

1. Lame de scie circulaire comportant une pluralité de plaquettes (30) soudées par intervalles sur une partie périphérique d'une base métallique (12) pour découper une pièce à usiner avec des arêtes tranchantes (32) formées sur la pluralité de plaquettes (30), dans laquelle
chacune des plaquettes (30) comporte une première face d'attaque (40) qui est contiguë avec l'arête tranchante (32), et une seconde face d'attaque (42) qui fait face à une cavité (16) agencée face à la plaquette (30) suivant le sens de rotation et présente une arête interne radialement vers l'intérieur qui est en contact avec une arête périphérique externe de la base métallique (12) qui définit la cavité (16),
dans laquelle la première face d'attaque (40) est formée de telle sorte qu'un premier angle d'attaque (θ1) est un angle négatif par rapport à une première ligne de référence (L1) tracée à partir d'un centre de rotation (0) de la lame de scie circulaire par rapport à l'arête tranchante (32), et
dans laquelle la seconde face d'attaque (42) est formée de telle sorte qu'un second angle d'attaque (θ2), qui est formé entre la première ligne de référence (L1) et une seconde ligne de référence (L2) qui passe par l'arête interne radialement vers l'intérieur le long de la seconde face d'attaque (42), est un angle négatif ;
**caractérisée en ce que**
la plaquette (30) est fixée par assemblage d'une partie de base (31), qui s'étend radialement vers l'intérieur de l'arête interne de la seconde face d'attaque (42), sur une partie d'installation (18), qui est formée sur la base métallique (12) de telle sorte qu'elle est en creux radialement vers l'intérieur afin de se conformer à la périphérie de la partie de base (31), de manière à souder la périphérie de la partie de base (31) sur la base métallique (12), et
la plaquette (30) présente une partie inclinée (44) sur la périphérie de la partie de base (31), qui est formée radialement vers l'intérieur et de manière contiguë par rapport à l'arête interne de la seconde face d'attaque (42) et inclinée dans la direction opposée au sens de rotation par rapport à la seconde ligne de référence (L2).

2. Lame de scie circulaire selon la revendication 1, dans laquelle
la seconde face d'attaque (42) est formée radialement vers l'intérieur de la première face d'attaque (40) et le second angle d'attaque (θ2) est défini de manière à être supérieur du côté positif au premier angle d'attaque (θ1).

3. Lame de scie circulaire selon la revendication 1,
dans laquelle la partie inclinée (44) est inclinée suivant un angle positif par rapport à la première ligne de référence (L1).
